# EUROPÄISCHE PATENTSCHRIFT

(11) **EP 2 902 585 B1**
(45) Veröffentlichungstag und Bekanntmachung des Hinweises auf die Patenterteilung: **24.08.2016**
(21) Anmeldenummer: 14000363.3
(22) Anmeldetag: 31.01.2014
(51) Int. Cl.: E21F 15/00, B09B 1/00, E21F 15/08, E21B 43/28, B65G 5/00

(54) **Verfahren zur Verfüllung mit Sole gefüllter untertägiger Hohlräume mit Versatz unter gleichzeitiger Gewinnung von in den untertägigen Hohlräumen befindlicher Sole**
Method for filling underground cavities filled with brine with an additive, with simultaneous recovery of brine in the underground hollow cavities
Procédé de remplissage d'espace creux souterrains remplis en saumure, tout en collectant simultanément de la saumure présente dans les espaces creux souterrains

(43) Veröffentlichungstag der Anmeldung: 05.08.2015
(73) Patentinhaber: Minex GmbH, 45966 Gladbeck (DE); Sodawerk Staßfurt GmbH & Co. KG, 39418 Staßfurt (DE)
(72) Erfinder: Diegel, Rudolf Dr., 50226 Frechen (DE); Roll, Jürgen, 46244 Bottrop (DE); Klee, Christian, 39418 Staßfurt, OT Nenndorf (DE)
(74) Vertreter: Lelgemann, Karl-Heinz

(56) Entgegenhaltungen:
- EP-A1- 1 994 995
- DE-A1- 3 411 998
- US-A- 4 435 290
- US-A- 5 043 149

## Beschreibung

Die Erfindung bezieht sich auf ein Verfahren zur Verfüllung mit Sole, z.B. mit NaCl-Sole, gefüllter untertägiger Hohlräume mit Versatz unter gleichzeitiger Gewinnung von in den untertägigen Hohlräumen befindlicher Sole. Das Dokument DE 3411998 offenbart ein solches Verfahren.

Um ein derartiges Verfahren mit einem vergleichsweise geringen technisch-konstruktiven und wirtschaftlichen Aufwand durchführen zu können, wobei insbesondere auch hinsichtlich ihrer Schadstoffbelastung problematische Werkstoffe verwendet werden sollen, wird vorgeschlagen, daß bei dem Verfahren in einen unteren Abschnitt eines untertägigen Hohlraums Versatzmaterial, bestehend aus einer Feststoffphase und einer Flüssigphase, eingebracht und aus einem oberen Abschnitt des untertägigen Hohlraums Sole, z.B. NaCl-Sole, entnommen wird, wobei sich zwischen dem unteren Abschnitt bzw. dem sich dort aus der Feststoffphase und einem Teil der Flüssigphase bildenden Versatz einerseits und dem oberen Abschnitt bzw. der Sole andererseits eine Trennschicht aus bei der Bildung des Versatzes nicht benötigter Flüssigphase des Versatzmaterials bildet, daß gleichzeitig in einen oberen Abschnitt eines weiteren untertägigen Hohlraums Sole aus dem oberen Abschnitt des einen untertägigen Hohlraums eingebracht und aus einer bei aus der Bildung von Versatz im unteren Abschnitt des weiteren untertägigen Hohlraums nicht benötigter Flüssigphase zwischen dem unteren Abschnitt bzw. dem sich dort aus der Feststoffphase und einem Teil der Flüssigphase bildenden Versatz einerseits und dem oberen Abschnitt bzw. der Sole andererseits gebildeten Trennschicht des weiteren untertägigen Hohlraums Trennschichtsole entnommen wird, daß in einer Mischstation staubförmige Versatzbaustoffe bzw. Abfälle und aus dem oberen Abschnitt des einen untertägigen Hohlraums entnommene Sole zu dem Versatzmaterial vermischt werden, und daß ein Teil der aus dem oberen Abschnitt des einen untertägigen Hohlraums entnommenen Sole für eine Verarbeitung, z.B. eine Sodaproduktion, abgezweigt wird, wobei immer dann, wenn die Trennschicht in dem weiteren untertägigen Hohlraum eine vorgebbare Mindestdicke erreicht, das Verfahren entsprechend umgestellt wird und umgekehrt abläuft, bis die Trennschicht in dem ersten untertägigen Hohlraum die vorgebbare Mindestdicke erreicht.

Vorteilhaft kann auch die aus der Trennschicht des weiteren untertägigen Hohlraums entnommene Trennschichtsole in der Mischstation zu dem Versatzmaterial vermischt werden.

Das vorstehend geschilderte erfindungsgemäße Verfahren ist als kombiniertes Verfahren ausgestaltet, wobei sowohl einige Aspekte des sog. Dickstoffversatzverfahrens als auch einige Aspekte des sog. Spülversatzverfahrens realisiert werden.

In der Mischstation werden aus dem einen Hohlraum stammende Sole, Trennschichtsole aus dem anderen Hohlraum und ein Feststoff in bestimmter Weise miteinander vermischt. Wenn die staubförmigen Versatzbaustoffe bzw. Abfälle, die den Feststoff bilden, Rauchgasreinigungsrückstände aus Abfallverbrennungsanlagen sind, enthält das bei der Vermischung entstandene Fluid entsprechend einen hohen Gehalt an Kalziumchlorid, wobei in dem Fluid bzw. Versatzmaterial darüber hinaus hohe Gehalte an denjenigen Schwermetallen etc. vorliegen, die in den Rauchgasreinigungsrückständen enthalten sind.

Die in der Mischstation hergestellte Mischung wird als das Versatzmaterial durch eine Rohrleitung in den unteren Bereich bzw. in den unteren Abschnitt eines untertägigen Hohlraums verbracht. Durch das Einbringen des Versatzmaterials in den unteren Bereich des untertägigen Hohlraums wird Sole aus diesem Hohlraum durch das Mundloch einer weiteren Rohrleitung, das deutlich oberhalb des Mundlochs der das Versatzmaterial führenden Rohrleitung angeordnet ist, aus dem untertägigen Hohlraum herausgedrückt. Aufgrund der Zusammensetzung und der Konditionierung des Versatzmaterials sammelt sich im unteren Bereich des untertägigen Hohlraums Versatz an, wobei dieser Versatz daraus entsteht, daß die Feststoffphase der das Versatzmaterial bildenden Mischung mit Teilen der Flüssigphase derselben reagiert. Andere Teile der Flüssigphase der Mischung sammeln sich oberhalb des Versatzes an und bilden eine Trennschicht zwischen dem Versatz einerseits und der Sole andererseits. Hierdurch wird eine Verunreinigung der Sole durch das Versatzmaterial weitestgehend vermieden.

Von daher kann die aus dem untertägigen Hohlraum entnommene Sole außer als Komponente für die Herstellung des Versatzmaterials in der Mischstation auch der Herstellung von z.B. Soda dienen, wofür die Reinhaltung der Sole von besonderer Bedeutung ist.

Bei der technischen Durchführung des erfindungsgemäßen Verfahrens werden zwei untertägige Hohlräume gleichzeitig mit einer entsprechenden Rohranlage ausgerüstet. In einem Hohlraum bzw. in einer Kaverne befindet sich das Mundloch einer als Innenrohr ausgestalteten Rohrleitung in der Trennschicht. Das Mundloch einer weiteren Rohrleitung befindet sich in einem oberen Abschnitt dieser Kaverne bzw. dieses Hohlraums.

In der anderen Kaverne befindet sich das Mundloch einer als Innenrohr ausgestalteten Rohrleitung, durch die hindurch Versatzmaterial in den unteren Bereich der Kaverne bzw. des Hohlraums eingebracht wird, im unteren Bereich der Kaverne bzw. des Hohlraums. Das Mundloch einer als ein das Innenrohr umgebendes Außenrohr ausgebildeten Rohrleitung befindet sich im oberen Bereich der Kaverne bzw. des Hohlraums, wo diese bzw. dieser mit Sole gefüllt ist.

In die andere Kaverne wird das Versatzmaterial durch das Innenrohr eingebracht. Dadurch wird Sole durch das Außenrohr aus der anderen Kaverne herausgedrückt und gerät durch eine geeignete Verbindung zum Außenrohr der einen Kaverne, durch das sie in die eine Kaverne hineingedrückt wird, und zwar in den oberen Bereich der einen Kaverne. Dadurch wird Trennschichtsole aus der Trennschicht in das Mundloch des Innenrohrs der Rohranlage der einen Kaverne gedrückt und so durch das Innenrohr zur Mischstation verbracht. Wenn die Trennschicht in der einen Kaverne eine vorgegebene Mindestdicke erreicht hat, wird der betreffende Verfahrensschritt beendet. Die Rohranlagen in den Kavernen werden dann umgestellt, so daß danach das vorstehend geschilderte Verfahren für einen bestimmten Zeitraum umgekehrt stattfinden kann, d.h. Trennschichtsole wird aus der Trennschicht der einen Kaverne zur Mischstation verbracht, wobei Sole aus der anderen Kaverne in die eine Kaverne verbracht wird.

Gemäß einer vorteilhaften Weiterbildung des erfindungsgemäßen Verfahrens wird die Sole mittels einer Pumpe aus dem oberen Abschnitt eines untertägigen Hohlraums in den oberen Abschnitt des anderen untertägigen Hohlraums gepumpt.

Um das erfindungsgemäße Verfahren mit einem geringen technisch-konstruktiven Aufwand realisieren zu können, ist es vorteilhaft, wenn das Versatzmaterial aus der Mischstation in den unteren Abschnitt des einen untertägigen Hohlraums bzw. die Trennschichtsole aus der Trennschicht des anderen untertägigen Hohlraums durch ein Innenrohr einer Rohranlage und die Sole aus dem oberen Abschnitt des einen untertägigen Hohlraums zum oberen Abschnitt des anderen untertägigen Hohlraums bzw. zur Mischstation und einem Abzweig zur Verarbeitung durch ein Außenrohr der Rohranlage geführt werden, wobei das Innenrohr und das Außenrohr der Rohranlage zueinander verstellt werden, so daß die Mundlöcher des Außenrohrs der Rohranlage in den oberen Abschnitten der untertägigen Hohlräume und ein Mundloch des Innenrohrs der Rohranlage im unteren Abschnitt des einen untertägigen Hohlraums und ein Mundrohr des Innenrohrs der Rohranlage in der Trennschicht des anderen untertägigen Hohlraums angeordnet wird.

Zweckmäßigerweise wird das Versatzmaterial stromab des Mischers der Mischstation in einem Rührwerk gerührt und mittels einer Pumpe durch das Innenrohr der Rohranlage in den unteren Abschnitt eines untertägigen Hohlraums gepumpt.

Wie bereits erwähnt, können als staubförmige Versatzbaustoffe bzw. Abfälle Rauchgasreinigungsrückstände aus Abfallverbrennungsanlagen eingesetzt werden.

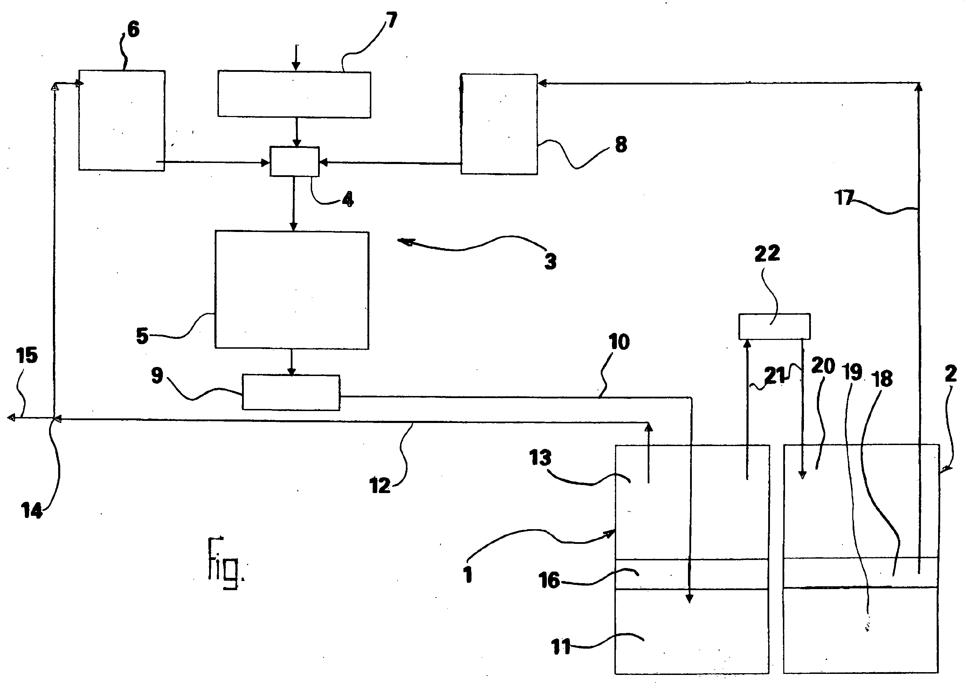

Im Folgenden wird die Erfindung anhand einer Ausführungsform unter Bezugnahme auf die Zeichnung näher erläutert, deren einzige Figur ein Ausführungsbeispiel eines erfindungsgemäßen Verfahrens zur Verfüllung mit Sole gefüllter untertägiger Hohlräume mit Versatz unter gleichzeitiger Gewinnung von in den untertägigen Hohlräumen befindlicher Sole prinzipiell darstellt.

Ein im Folgenden anhand einer Ausführungsform beschriebenes erfindungsgemäßes Verfahren kommt zum Einsatz, wenn untertägige Hohlräume 1, 2, z.B. Kavernen, mit Versatz gefüllt und gleichzeitig in den untertägigen Hohlräumen 1, 2 befindliche Sole, z.B. NaCl-Sole, gewonnen werden soll. Im Folgenden wird dieses Verfahren in Verbindung mit den in der Figur gezeigten beiden Hohlräumen 1, 2 beschrieben. Es sei darauf hingewiesen, daß das erfindungsgemäße Verfahren auch für eine größere Anzahl von Hohlräumen 1, 2 entsprechend zur Anwendung kommen kann.

Bei dem erfindungsgemäßen Verfahren wird in einer Mischstation 3, zu der ein Mischer 4 und ein Rührwerk 5 gehören, ein Versatzmaterial hergestellt, das in die mit NaCl-Sole gefüllten untertägigen Hohlräume 1, 2 verbracht werden soll. Das Rührwerk 5 kann mehrstufig ausgebildet sein, zu jeder Stufe des Rührwerks 5 können diverse Rührvorrichtungen etc. gehören.

Im Mischer 4 werden einzelne Komponenten des Versatzmaterials zusammengeführt. Hierbei handelt es sich bei dem beschriebenen Ausführungsbeispiel um NaCl-Sole, die dem Mischer 4 aus einem NaCl-Solebehälter 6 zugeführt wird, um einen feinkörnigen bzw. staubförmigen Feststoff, z.B. um Rauchgasreinigungsrückstände aus Abfallverbrennungsanlagen, der bzw. die dem Mischer 4 aus einer ggf. mit Dosierstationen ausgerüsteten Siloanlage 7 zugeführt wird bzw. werden, und um Trennschichtsole, deren Herkunft später erläutert werden wird und die dem Mischer 4 aus einem Trennschichtsolebehälter 8 zugeführt wird.

Im Mischer 4 und im Rührwerk 5 der Mischstation wird aus den genannten Komponenten ein verpumpbares Fluid hergestellt, das das Versatzmaterial bildet.

Wenn als Feststoffkomponente, wie vorstehend angegeben, Rauchgasreinigungsrückstände aus Abfallverbrennungsanlagen eingesetzt werden, enthält das das Versatzmaterial bildende Fluid entsprechend einen hohen Gehalt an Kalziumchlorid, wobei in dem Fluid bzw. in dem Versatzmaterial darüber hinaus hohe Gehalte an denjenigen Schwermetallen etc. vorliegen, die in den Rauchgasreinigungsrückständen enthalten sind.

Dieses verpumpbare Fluid bzw. Versatzmaterial wird mittels einer Pumpe 9, die stromab des Rührwerks 5 der Mischstation 3 angeordnet ist, durch eine Rohrleitung 10 in einen unteren Abschnitt 11 des untertägigen Hohlraums 1 gepumpt.

Das Mundloch der Rohrleitung 10 ist innerhalb des Hohlraums 1 in Vertikalrichtung verstellbar, so daß das Mundloch mit zunehmender Verfüllung des Hohlraums 1 mit Versatzmaterial in aufwärtiger Richtung verstellt werden kann.

Durch die Rohrleitung 10 gerät das Versatzmaterial in den unteren Abschnitt 11 des Hohlraums 1. Durch das Einbringen des Versatzmaterials in den unteren Abschnitt 11 des Hohlraums 1 wird im Hohlraum 1 befindliche NaCl-Sole durch eine Rohrleitung 12, deren Mundloch in einem oberen Abschnitt 13 des untertägigen Hohlraums 1 angeordnet ist, aus dem untertägigen Hohlraum 1 herausgedrückt. In der Rohrleitung 12 ist ein Abzweig 14 angeordnet, von dem aus ein Teil der durch die Rohrleitung 12 aus dem untertägigen Hohlraum 1 herausgedrückten NaCl-Sole zu einer durch den Pfeil 15 in der Figur lediglich angedeuteten Sodaproduktion gelangt.

Derjenige Teil der in der Rohrleitung 12 befindlichen NaCl-Sole, der nicht zur Sodaproduktion 15 gelangt, wird durch die Rohrleitung 12 zu dem vorstehend bereits erwähnten NaCl-Solebehälter 6 gefördert, aus dem heraus die aus dem untertägigen Hohlraum 1 stammende NaCl-Sole als eine Komponente des Versatzmaterials dem Mischer 4 zugeführt wird.

Wie vorstehend bereits erwähnt, ist das Mundloch der Rohrleitung 10, durch die hindurch das Versatzmaterial in den unteren Abschnitt 11 des untertägigen Hohlraums 1 eingeführt wird, in Vertikalrichtung deutlich unterhalb des Mundlochs der Rohrleitung 12 angeordnet, durch die hindurch NaCl-Sole aus dem oberen Abschnitt 13 des untertägigen Hohlraums 1 herausgedrückt wird.

In dem dem unteren Abschnitt 11 des untertägigen Hohlraums 1 zugeführten Versatzmaterial reagiert die Feststoffphase der hergestellten Mischung mit Teilen der Flüssigphase der hergestellten Mischung. Hierdurch entsteht der Versatz, der den untertägigen Hohlraum 1 bzw. dessen unteren Abschnitt 11 sukzessive ausfüllt. Die bei der vorstehend genannten Reaktion nicht benötigten Teile der Flüssigphase des Versatzmaterials sammeln sich oberhalb des Versatzes / an und bilden eine Trennschicht 16, die den im unteren Abschnitt 11 des untertägigen Hohlraums 1 befindlichen Versatz von der im oberen Abschnitt 13 des untertägigen Hohlraums 1 befindlichen NaCl-Sole trennt. Hierdurch wird erreicht, daß die aus dem oberen Abschnitt 13 des untertägigen Hohlraums 1 durch die Rohrleitung 12 zum Abzweig 14 und von hier aus zur Sodaproduktion 15 gelangende NaCl-Sole ausreichend rein ist, um in der Sodaproduktion 15 verarbeitet werden zu können.

Zumindest in demjenigen Abschnitt der Rohrleitungen 10, 12, die in den untertägigen Hohlraum 1 hineinragen, kann die das Versatzmaterial führende Rohrleitung 10 als Innenrohr ausgeführt sein, welches von einem Außenrohr, das die die NaCl-Sole führende Rohrleitung 12 bildet, konzentrisch umgeben ist, wobei das Innenrohr bzw. die Rohrleitung 10 und das Außenrohr bzw. die Rohrleitung 12 zueinander in Vertikalrichtung verstellbar sind.

Während in den untertägigen Hohlraum 1 durch die Rohrleitung 10 Versatzmaterial eingebracht und aus dem untertägigen Hohlraum 1 durch die Rohrleitung 12 NaCl-Sole entnommen wird, wird durch eine Rohrleitung 17, deren Mundloch im Bereich einer Trennschicht 18 angeordnet ist, Trennschichtsole in den Trennschichtsolebehälter 8 geleitet, aus dem heraus die Trennschichtsole dem Mischer 4 zur Herstellung des Versatzmaterials zugeführt wird. Die Trennschicht 18 befindet sich zwischen einem bereits mit Versatz verfüllten unteren Abschnitt 19 des zweiten untertägigen Hohlraums 2 und einem noch mit NaCl-Sole gefüllten oberen Abschnitt 20 dieses zweiten untertägigen Hohlraums 2.

Zum Ausgleich für die aus dem zweiten untertägigen Hohlraum 2 entnommene Trennschichtsole wird in den oberen Abschnitt 20 des zweiten untertägigen Hohlraums 2 NaCl-Sole aus dem ersten untertägigen Hohlraum 1 eingebracht. Hierzu ist zwischen den beiden untertägigen Hohlräumen 1, 2 eine Rohrleitung 21 vorgesehen, in der eine Pumpe 22 angeordnet ist. Die in den untertägigen Hohlräumen 1, 2 angeordneten Mundlöcher der Rohrleitung 21 sind in dem jeweils von NaCl-Sole ausgefüllten oberen Abschnitt 13 bzw. 20 der untertägigen Hohlräume 1 bzw. 2 angeordnet.

Sobald die Trennschicht 18 im zweiten untertägigen Hohlraum 2 eine Mindestdicke erreicht hat, die erforderlich ist, um die oberhalb der Trennschicht 18 befindliche NaCl-Sole vor Verunreinigungen zu schützen, wird das Verfahren umgestellt. Und zwar wird in dem darauf folgenden Verfahrensschritt in den unteren Abschnitt 19 des untertägigen Hohlraums 2 Versatzmaterial eingebracht, NaCl-Sole aus dem oberen Abschnitt 20 des untertägigen Hohlraums 2 zur Sodaproduktion 15 bzw. zum NaCl-Solebehälter 6 geleitet und NaCl-Sole aus dem oberen Abschnitt 20 des untertägigen Hohlraums 2 in den oberen Abschnitt 13 des ersten untertägigen Hohlraums 1 geleitet. Dahingegen wird aus der Trennschicht 16 des ersten untertägigen Hohlraums 1 Trennschichtsole zum Trennschichtsolebehälter 8 geleitet, bis die Trennschicht 16 im ersten untertägigen Hohlraum 1 die vorstehend bereits erwähnte Mindestdicke erreicht, woraufhin das Verfahren erneut umgestellt wird.

## Patentansprüche

1. Verfahren zur Verfüllung mit Sole, z.B. mit NaCl-Sole, gefüllter untertägiger Hohlräume (1, 2) mit Versatz unter gleichzeitiger Gewinnung von in den untertägigen Hohlräumen (1, 2) befindlicher Sole, bei dem in einen unteren Abschnitt (11) eines untertägigen Hohlraums (1) Versatzmaterial, bestehend aus einer Feststoffphase und einer Flüssigphase, eingebracht und aus einem oberen Abschnitt (13) des untertägigen Hohlraums (1) Sole entnommen wird, wobei sich zwischen dem unteren Abschnitt (11) bzw. dem sich dort aus der Feststoffphase und einem Teil der Flüssigphase bildenden Versatz einerseits und dem oberen Abschnitt (13) bzw. der Sole andererseits eine Trennschicht (16) aus bei der Bildung des Versatzes nicht benötigter Flüssigphase des Versatzmaterials bildet, bei dem gleichzeitig in einen oberen Abschnitt (20) eines weiteren untertägigen Hohlraums (2) Sole aus dem oberen Abschnitt (13) des einen untertägigen Hohlraums (1) eingebracht und aus einer bei der Bildung von Versatz im unteren Abschnitt (19) des weiteren untertägigen Hohlraums (2) nicht benötigter Flüssigphase zwischen dem unteren Abschnitt (19) bzw. dem sich dort aus der Feststoffphase und einem Teil der Flüssigphase bildenden Versatz einerseits und dem oberen Abschnitt (20) bzw. der Sole andererseits gebildeten Trennschicht (18) des weiteren untertägigen Hohlraums (2) Trennschichtsole entnommen wird, bei dem in einer Mischstation (3) staubförmige Versatzbaustoffe bzw. Abfälle und aus dem oberen Abschnitt (13) des einen untertägigen Hohlraums (1) entnommene Sole zu dem Versatzmaterial vermischt werden, und bei dem ein Teil der aus dem oberen Abschnitt (13) des einen untertägigen Hohlraums (1) entnommenen Sole für eine Verarbeitung, z.B. eine Sodaproduktion (15), abgezweigt wird, wobei immer dann, wenn die Trennschicht (18) in dem weiteren untertägigen Hohlraum (2) eine vorgebbare Mindestdicke erreicht, das Verfahren entsprechend umgestellt wird und umgekehrt abläuft, bis die Trennschicht (16) in dem ersten untertägigen Hohlraum (1) die vorgebbare Mindestdicke erreicht.

2. Verfahren nach Anspruch 1, bei dem in der Mischstation (3) auch die aus der Trennschicht (18) des weiteren untertägigen Hohlraums (2) entnommene Trennschichtsole zu dem Versatzmaterial vermischt wird.

3. Verfahren nach Anspruch 1 oder 2, bei dem die Sole mittels einer Pumpe (22) aus dem oberen Abschnitt (13, 20) eines untertägigen Hohlraums (1, 2) in den oberen Abschnitt (20, 13) des anderen untertägigen Hohlraums (2, 1) gepumpt wird.

4. Verfahren nach einem der Ansprüche 1 bis 3, bei dem das Versatzmaterial aus der Mischstation (3) in den unteren Abschnitt (11) des einen untertägigen Hohlraums (1) bzw. die Trennschichtsole aus der Trennschicht (18) des anderen untertägigen Hohlraums (2) durch ein Innenrohr einer Rohranlage und die Sole aus dem oberen Abschnitt (13) des einen untertägigen Hohlraums (1) zum oberen Abschnitt (20) des anderen untertägigen Hohlraums (2) bzw. zur Mischstation (3) und einem Abzweig (14) zur Verarbeitung, z.B. Sodaproduktion (15), durch ein Außenrohr der Rohranlage gefördert werden, wobei das Innenrohr und das Außenrohr der Rohranlage zueinander verstellt werden, so daß die Mundlöcher des Außenrohrs der Rohranlage in den oberen Abschnitten (13, 20) der untertägigen Hohlräume (1, 2) und ein Mundloch des Innenrohrs der Rohranlage im unteren Abschnitt (11) des einen untertägigen Hohlraums (1) und ein Mundloch des Innenrohrs der Rohranlage in der Trennschicht (18) des anderen untertägigen Hohlraums (2) angeordnet wird.

5. Verfahren nach einem der Ansprüche 1 bis 4, bei dem das Versatzmaterial stromab eines Mischers (4) der Mischstation (3) in einem Rührwerk (5) gerührt und mittels einer Pumpe (9) durch das Innenrohr der Rohranlage in den unteren Abschnitt (11) eines untertägigen Hohlraums (1) gepumpt wird.

6. Verfahren nach einem der Ansprüche 1 bis 5, bei dem als staubförmige Versatzbaustoffe bzw. Abfälle Rauchgasreinigungsrückstände aus Abfallverbrennungsanlagen eingesetzt werden.

## Claims

1. A method for backfilling cavities (1, 2) filled with brine, e.g. with NaCl brine, with backfill whilst simultaneously extracting brine located in the underground cavities (1, 2), in which backfill material, consisting of a solid phase and a liquid phase, is introduced into a lower section (11) of an underground cavity (1) and brine is removed from an upper section (13) of the underground cavity (1), wherein, between the lower section (11) or the backfill that is formed there from the solid phase and a part of the liquid phase on the one hand and the upper section (13) or the brine on the other hand, a separation layer (16) is formed from the liquid phase of the backfill material that is not required when forming the backfill, in which simultaneously brine from the upper section (13) of the one underground cavity (1) is introduced into an upper section (20) of a further underground cavity (2) and separation-layer brine is removed from a separation layer (18) of the further underground cavity (2) formed from a liquid phase not required during the formation of backfill in the lower section (19) of the further underground cavity (2) between the lower section (19) or the backfill that is formed there from the solid phase and a part of the liquid phase on the one hand and the upper section (20) or the brine on the other hand, in which dust-like backfill construction materials or wastes and brine removed from the upper section (13) of the one underground cavity (1) are mixed in a mixing station (3) to create the backfill material, and in which a part of the brine removed from the upper section (13) of the one underground cavity (1) is branched off for processing, e.g. soda production (15), wherein whenever the separation layer (18) in the further underground cavity (2) reaches a predeterminable minimum thickness, the method is adapted accordingly and runs in reverse until the separation layer (16) reaches the predeterminable minimum thickness in the first underground cavity (1).

2. The method according to Claim 1, in which the separation-layer brine removed from the separation layer (18) of the further underground cavity (2) is also mixed in the mixing station (3) to create the backfill material.

3. The method according to Claim 1 or 2, in which the brine is pumped out of the upper section (13, 20) of an underground cavity (1, 2) into the upper section (20, 13) of the other underground cavity (2, 1) by means of a pump (22).

4. The method according to one of Claims 1 to 3, in which the backfill material is conveyed out of the mixing station (3) into the lower section (11) of the one underground cavity (1) or the separation-layer brine is conveyed out of the separation layer (18) of the other underground cavity (2) through an inner pipe of a pipe system and the brine is conveyed out of the upper section (13) of the one underground cavity (1) to the upper section (20) of the other underground cavity (2) or to the mixing station (3) and a branch (14) for processing, e.g. soda production (15), through an outer pipe of the pipe system, wherein the inner pipe and the outer pipe of the pipe system are misaligned with respect to one another, so that the mouths of the outer pipe of the pipe system are arranged in the upper sections (13, 20) of the underground cavities (1, 2) and a mouth of the inner pipe of the pipe system is arranged in the lower section (11) of the one underground cavity (1) and a mouth of the inner pipe of the pipe system is arranged in the separation layer (18) of the other underground cavity (2).

5. The method according to one of Claims 1 to 4, in which the backfill material is agitated in an agitator (5) downstream of a mixer (4) of the mixing station (3) and pumped through the inner pipe of the pipe system into the lower section (11) of an underground cavity (1) by means of a pump (9).

6. The method according to one of Claims 1 to 5, in which flue-gas-cleaning residues from waste incineration plants are used as dust-like backfill materials or wastes.

## Revendications

1. Procédé de remplissage de cavités souterraines (1, 2) remplies de saumure, par exemple de saumure de NaCl, avec du remblai pendant l'extraction simultanée de saumure se trouvant dans les cavités souterraines (1, 2), dans lequel du matériau de remblai, composé d'une phase solide et d'une phase liquide, est intégré dans une section inférieure (11) d'une cavité souterraine (1) et de la saumure est prélevée dans une section supérieure (13) de la cavité souterraine (1), dans lequel, entre le remblai s'y formant à partir de la phase solide et d'une partie de la phase liquide d'une part et la section supérieure (13) ou la saumure d'autre part, une couche séparatrice (16) se forme lors de la formation du remblai de phase liquide non nécessaire du matériau de remblai, dans lequel, en même temps, de la saumure provenant de la section supérieure (13) d'une autre cavité souterraine (1) est intégrée dans une section supérieure (20) et, à partir d'une phase liquide non nécessaire lors de la formation de remblai, de la couche séparatrice est prélevée dans une phase liquide non nécessaire lors de la formation de remblai dans la section inférieure (19) de l'autre cavité souterraine (2) entre la section inférieure (19) ou le remblai s'y formant à partir de la phase solide et d'une partie de la phase liquide d'une part et de la section supérieure (20) ou de la saumure de l'autre cavité souterraine (2), dans lequel, dans une station de mélange (3), des matériaux de construction de remblai pulvérulents ou des déchets et de la saumure prélevée dans la section supérieure (13) de la cavité souterraine (1) sont mélangés au matériau de remblai et dans lequel une partie de la saumure prélevée dans la section supérieure (13) de la cavité souterraine (1) bifurque pour une transformation, par exemple une production de soude (15), sachant que, lorsque la couche séparatrice (18) atteint une épaisseur minimale prédéfinissable dans l'autre cavité souterraine (2), le procédé est modifié en conséquence et se déroule dans l'ordre inverse jusqu'à ce que la couche séparatrice (16) atteigne l'épaisseur minimale prédéfinissable dans la première cavité souterraine (1).

2. Procédé selon la revendication 1, dans lequel, dans la station de mélange (3), la saumure de couche séparatrice prélevée dans la couche séparatrice (18) de l'autre cavité souterraine (2) est mélangée au matériau de remblai.

3. Procédé selon la revendication 1 ou 2, dans lequel la saumure est pompée au moyen d'une pompe (22) depuis la section supérieure (13, 20) d'une cavité souterraine (1, 2) vers la section supérieure (20, 13) de l'autre cavité souterraine (2, 1).

4. Procédé selon la revendication 1, dans lequel le matériau de remblai est transporté depuis la station de mélange (3) vers la section inférieure (11) de la cavité souterraine (1) ou la saumure de couche séparatrice de la couche séparatrice (18) provenant de l'autre cavité souterraine (2) par un tuyau intérieur d'un système de canalisation et la saumure provenant de la section supérieure (13) de la cavité souterraine (1) vers la section supérieure (20) de l'autre cavité souterraine (2) ou vers la station de mélange (3) vers et une bifurcation (14) pour transformation, par exemple production de soude (15), par un tuyau extérieur du système de canalisation, le tuyau intérieur et le tuyau extérieur étant réglés l'un par rapport à l'autre de manière à ce que les trous d'embouchure du tuyau extérieur du système de canalisation soient disposés dans les sections supérieures (13, 20) de la cavité souterraine (1, 2) et qu'un trou d'embouchure du tuyau intérieur du système de canalisation soit disposé dans la section inférieure (11) de la cavité souterraine (1) et un trou d'embouchure du tuyau intérieur du système de canalisation dans la couche séparatrice (18) de l'autre cavité souterraine (2).

5. Procédé selon la revendication 1 à 4, dans lequel le matériau de remblai est mélangé en aval d'un mélangeur (4) de la station de mélange (3) dans un agitateur (5) et pompé au moyen d'une pompe (9) par le tuyau intérieur du système de canalisation vers la section inférieure (11) d'une cavité souterraine (1).

6. Procédé selon la revendication 1 à 5, dans lequel on utilise comme matériaux de construction de remblai pulvérulents ou comme déchets des résidus d'épuration de gaz issus de stations d'incinération des déchets.
